# EUROPEAN PATENT SPECIFICATION

(11) **EP 1 049 227 B1**
(45) Date of publication and mention of the grant of the patent: **14.12.2011**
(21) Application number: 00201440.5
(22) Date of filing: 20.04.2000
(51) Int. Cl.: H02G 5/04

(54) **Distribution bars protected against contacts**
Verteilungsschienen mit Berührungsschutz
Barres de distibution avec protection contre les contacts accidentels

(30) Priority: 30.04.1999 IT MI990927
(43) Date of publication of application: 02.11.2000
(73) Proprietor: BTICINO S.P.A., 20154 Milano (IT)
(72) Inventor: Fabrizi, Fabrizio, 24122 Bergamo (IT); Re, Marcello, 21040 Venegono Superiore - Varese (IT)
(74) Representative: Long, Giorgio

(56) References cited:
- CH-A- 684 721
- GB-A- 2 159 343
- US-A- 5 561 271

## Description

The present invention relates to finger-test safety electrical-current distribution bars.

An electrical-current distribution bar with the features of the preamble of claim 1 is disclosed in GB-A-2 159 343.

Electrical-energy distribution bars, to which user devices are connected with the interposition of electrical devices such as switches, earthing switches, safety devices, etc., are used in industrial electrical systems. Most of the devices are modular and standardized and are constructed in a manner such that they can be fitted in a restrained manner on a support rail on which they are arranged side by side to form groups which can be made up according to the various requirements of use.

Suitable adapters are used to connect these devices to the distribution bars. In particular, an adapter for "DIN modules" has a contact terminal projecting from its front for engagement in the clip contact of the device. This terminal is connected, inside the adapter body, to a rear terminal having a clip contact which engages the distribution bar. In particular, the two elements of the clip engage the upper and lower faces of the bar, respectively, establishing electrical contact.

In these modules, the distribution bars are fitted in supports which can house a plurality of bars. The function of the support is not only to support the distribution bars but also, as far as possible, to limit access to them for obvious reasons of safety.

However, this system is not completely satisfactory from the point of view of the user's safety. In fact, whereas access to the upper and lower surfaces of the distribution bars is difficult, their front profiles are completely exposed, with considerable risk to anyone who has to work in their vicinity.

To reduce the risk of contact with live parts to the minimum, a test has been defined for use during the design of new electrical devices. That is, a maximum dimension of opening which satisfies this safety requirement and a standardized instrument known as a "test finger" have been defined and standardized for checking compliance with this requirement.

The "test finger" test is not satisfied by the use of distribution bars such as those described above.

The problem upon which the present invention is based is that of providing a distribution bar which overcomes the disadvantages explained above, particularly a distribution bar with finger-test safety.

This problem has been solved by an electrical-current distribution bar as claimed in the appended claims.

The characteristics and the advantages of the distribution bar of the present invention will become clearer from the following description of two embodiments thereof, given by way of non-limiting example with reference to the appended drawings:
Figure 1 is an exploded, perspective view of the support bar, adapter and distribution bar assembly
Figure 2 is a cross-section of the assembly of Figure 1,
Figure 3 is a view of the assembly of Figure 2 in working conditions,
Figure 4 is a perspective view of a distribution bar according to the embodiment of Figure 1,
Figure 5 is an exploded, perspective view of the support bar, adapter and distribution bar assembly according to a first embodiment of the present invention,
Figure 6 is a cross-section of the assembly of Figure 5,
Figure 7 is a schematic view of a device for extruding plastics material onto a conductor bar,
Figure 8 is an exploded, perspective view of the support bar, adapter and distribution bar assembly according to a second embodiment of the present invention,
Figure 9 is a cross-section of the support bar and of the respective distribution bars according to the embodiment of Figure 8,
Figure 10 is a partially-sectioned, perspective view of a detail of the distribution bar according to the embodiment of Figure 8.

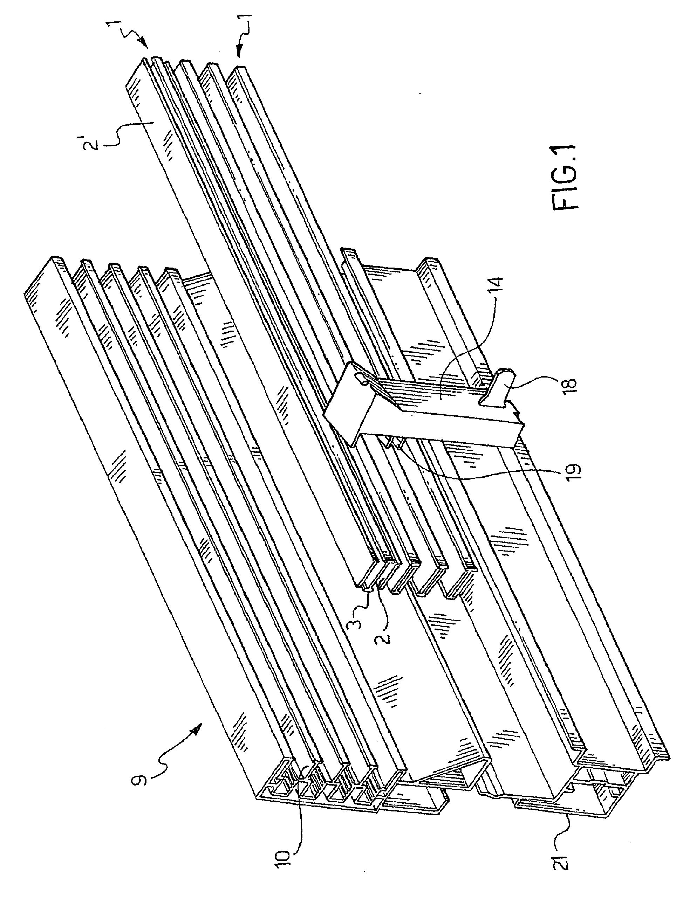

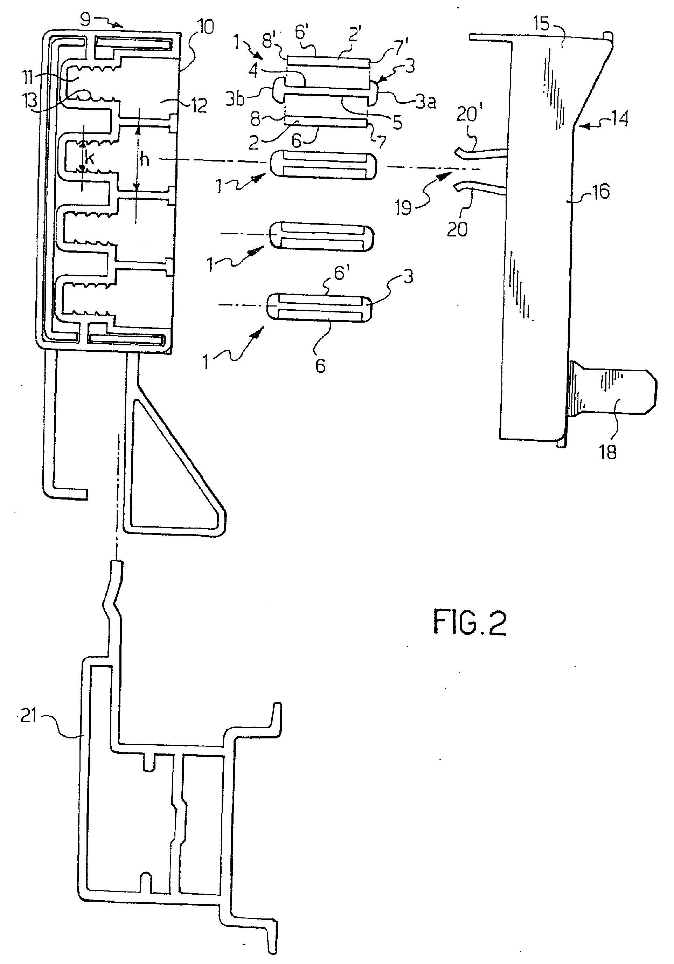

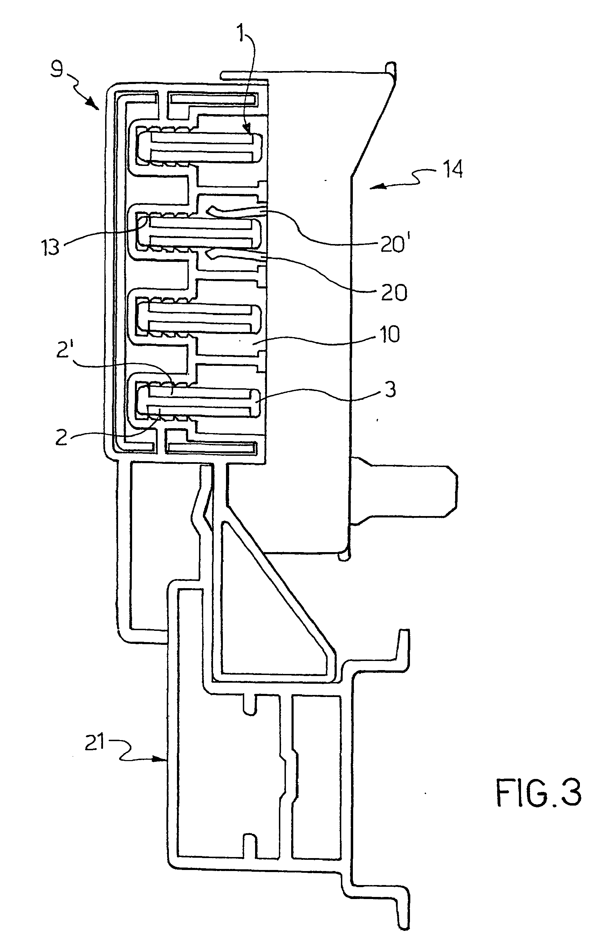

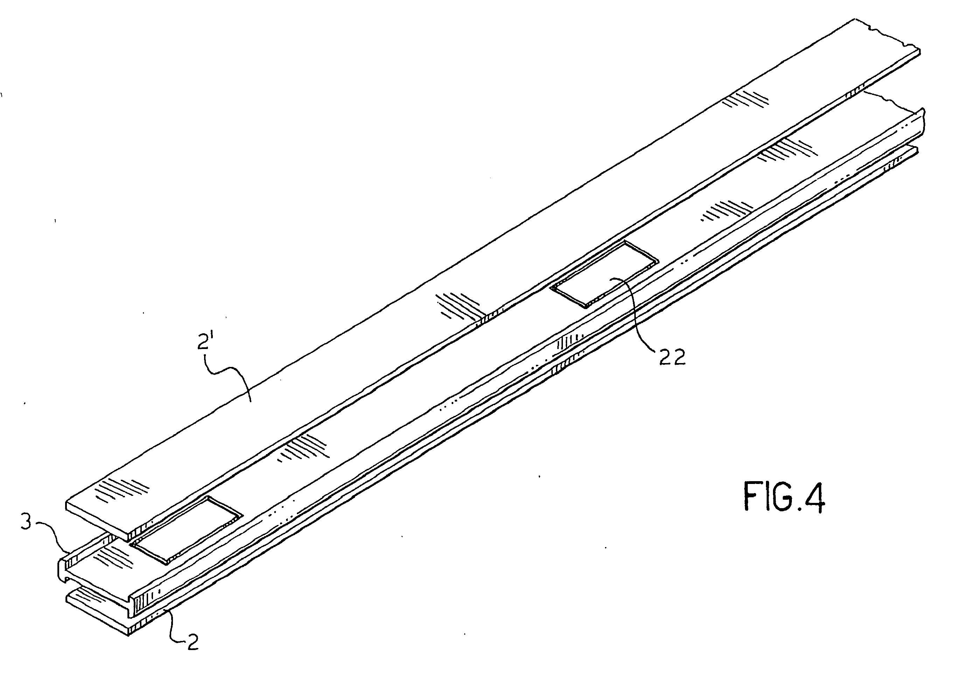

Figures 1, 2, 3 and 4 show a finger-sohe distribution bar 1 which however is not an embodiment of the present invention. The distribution bar comprises two opposed strips 2, 2' of a material which is a conductor of electrical energy (for example, copper), between which an insulating support 3 is interposed.

The insulating support 3 extends throughout the length of the strips 2, 2' and has a double T-shaped cross-section, the longer portion of which has a length substantially corresponding to the width of the strips 2, 2', whereas the smaller portions, which extend perpendicular to the longer portion at the two ends thereof, form profiles 3a, 3b of a height which substantially corresponds to the sum of the thicknesses of the two strips 2, 2' and of the thickness of the longer portion of the support 3. An upper seat 4 and a lower seat 5 are thus formed in the support 3 to house the strips 2, 2'.

The support 3 is made of a suitable insulating material such as, for example, heat-resistant plastics or rubber.

The distribution bar 1 is assembled by introducing the two strips 2, 2' into the respective lower and upper seats 5 and 4. The outer faces 6, 6' of the two strips 2, 2' thus remain exposed, whilst their front and rear edges 7, 7' and 8, 8' are concealed by the insulating support 3.

The two strips 2, 2' are in electrical contact with one another by means of an intermediate element of conductive material such as, for example, one or more metal plates 22 - which are housed in suitable openings formed in the body of the insulating support 3 - and which put the respective seats 4, 5 into communication, or other elements extending through the strips, such as a nut and bolt system.

The distribution bars 1 are then inserted in the base 9 which comprises one or more compartments 10 in which the bars 1 can be housed and restrained. Each compartment 10 comprises an inner portion 11 having teeth 13 for engaging the outer faces 6, 6' of the distribution bar 1, and an outer portion 12 having an opening h larger than the opening k of the inner portion 11. Once the rear portion of the distribution bar 1 has been inserted in the compartment 10, it is thus engaged by the teeth 13 of the inner portion 11, leaving the front portion of the bar 1, which is housed in the outer portion 12, free. The depth of the compartment 10 is in fact such as not to allow the bar 1 to project to the exterior.

The base 9 in turn can be fixed releasably to a fixed structure 21 by suitable snap means of known type. The fixed structure 1 may be fixed to a wall or within an electrical switchboard beforehand.

Once the unit comprising the base 9 and the respective distribution bars 1 has been assembled, the adapter 14 can be put in place.

The adapter 14 comprises a body 15 having a front face 16 and a rear face 17. A contact terminal 18 is disposed on the front face 16 for engagement in the clip contact of a device using electrical current (not shown). This terminal 18 is connected, inside the body of the adapter, to a terminal disposed on the rear face 17 and having a clip contact 19 for engaging the distribution bar 1.

When the adapter 14 is positioned on a distribution bar 1, the arms 20, 20' of the clip 19 engage the two outer faces 6, 6' of the bar, establishing electrical contact.

It is clear from the foregoing description and from the drawings that the distribution bar 1 is a finger-test bar. In fact, the outer surfaces 6, 6' of the bar are disposed inside the compartments 10 so as to be accessible only to the arms 20, 20' of the clip 19, whilst the front edges 7, 7' of the strips 2, 2' are covered by the insulating support 3 and are therefore not accessible to contact.

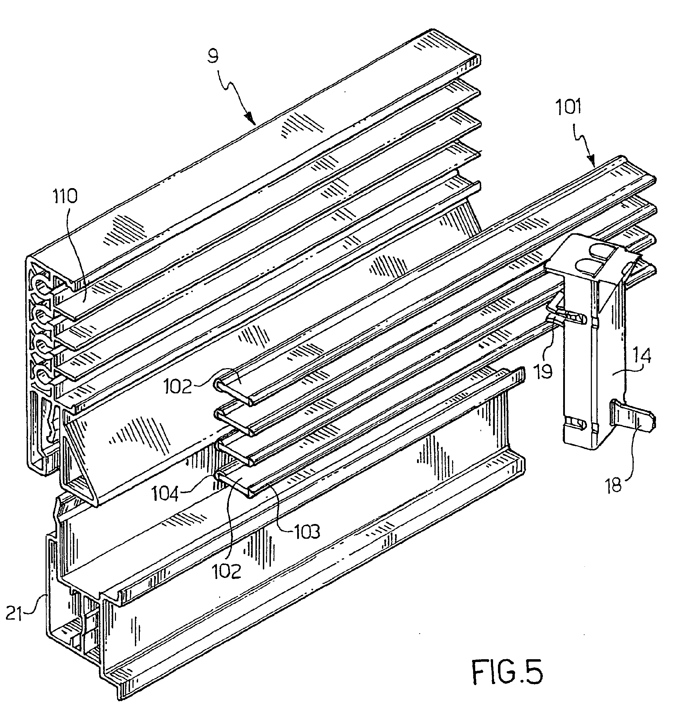

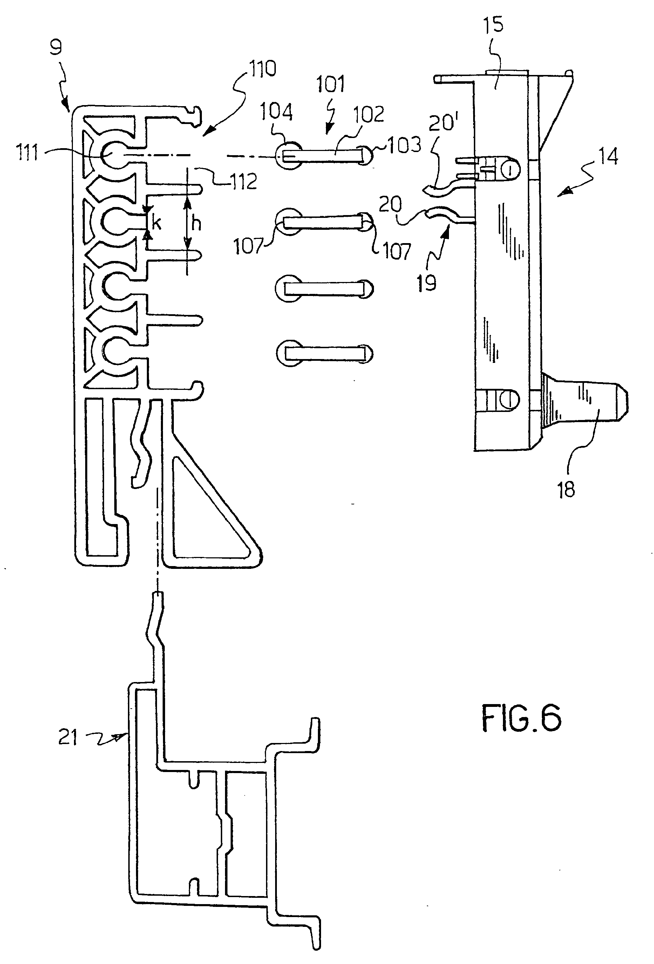

A first embodiment of the distribution bar of the present invention is described with reference to Figures 5 and 6.

According to this embodiment, the distribution bar 101 comprises a strip 102 of material which conducts electrical energy (for example, copper). Profiled sections 103, 104 made of insulating material such as, for example, heat-resistant plastics material, are fixed to both edges of the strip 102.

The profile 104 which is intended to be fitted in the compartment 110 of the base 9, is shaped in a manner such that it can be snap-engaged in a complementary seat formed in the inner portion 111 of the compartment 110. For example, it may have a bulbous cross-section, as shown in Figures 5 and 6. On the other hand, it suffices for the front profiled section 103 to cover the thickness of the strip 102 completely, although a bulbous shape similar to that of the rear profile 104 is not excluded.

The distribution bar 101 is assembled with the base 9 and the adapter 14 in exactly the same way as described for the first embodiment of the present invention.

It is clear that, in this embodiment also, the distribution bar 101 solves the problem upon which the present invention is based, since the insulating profiled section 103 prevents a user from accidentally coming into contact with the front edge of the strip 102.

It is important that the profiled sections 103, 104 are firmly anchored to the strip 102. They are extruded directly onto the strip 102.

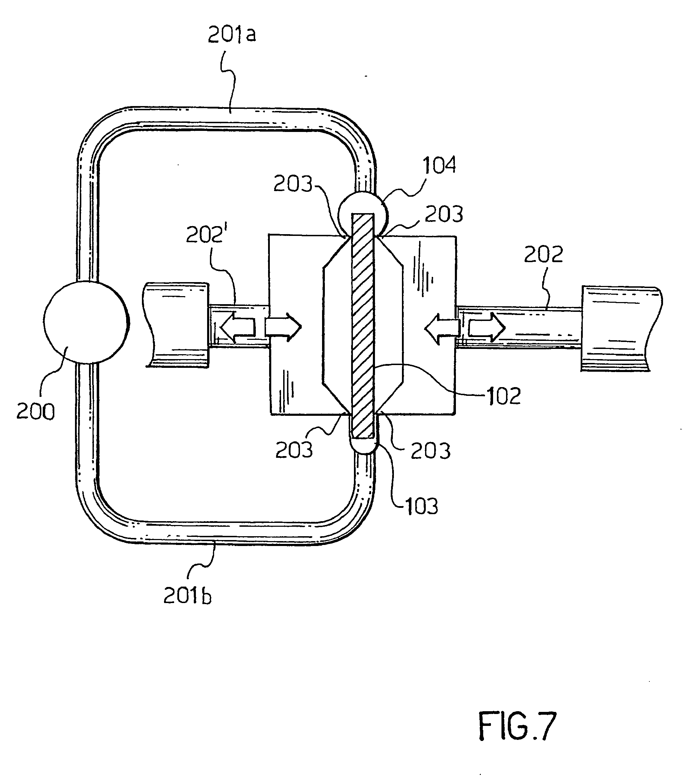

The extrusion method shown schematically in Figure 7 has been defined to permit better anchorage of the profiles 103, 104 to the strip 102. According to this method, the material is extruded by a conventional extruder 200 and is transported through ducts 201a, 201b which terminate in the region of the two edges of the strip 102 to be covered. The regions of the distribution bar which are to be covered with insulating material are roughened beforehand, for example, by milling.

The ducts 201a, 201b comprise flow-regulating means (not shown) which enable the quantity of extruded material deposited on the strip to be regulated. It is thus possible to achieve a covering of greater or lesser thickness, as shown in the drawing. The strip is caused to slide by suitable feed means (not shown) in a direction perpendicular to the plane of the drawing, so that the edges of the strip are covered throughout their length as the material is gradually extruded.

Two scoring tools 202, 202' are also provided, disposed facing one another and each having a pair of blades 203 spaced apart by a distance less than the width of the strip 102. These scoring tools 202, 202' are movable along an axis perpendicular to the plane in which the strip 102 lies, in the directions indicated by the arrows in the drawing. A suitable manual or pneumatic actuator (not shown in the drawing) brings about this movement. In the operative stage, the scoring tools 202, 202' exert a predetermined pressure on the two surfaces of the strip 102 whilst the strip, as stated, is caused to slide perpendicularly. By virtue of the relative ductility of the copper of which the strip 102 is made, the blades thus create two longitudinal grooves on each face of the strip. These grooves constitute anchorage lines for the extruded material which, since it is still liquid, fills the grooves and, as it sets, becomes firmly engaged therein.

It is important that the scoring tools 202, 202' and the distribution outlets of the ducts 201a, 201b be offset longitudinally with the scoring tools disposed upstream and the material distribution outlets downstream, relative to the direction of movement of the strip. The extruded material is thus distributed onto a portion of the strip in which the grooves have already been formed.

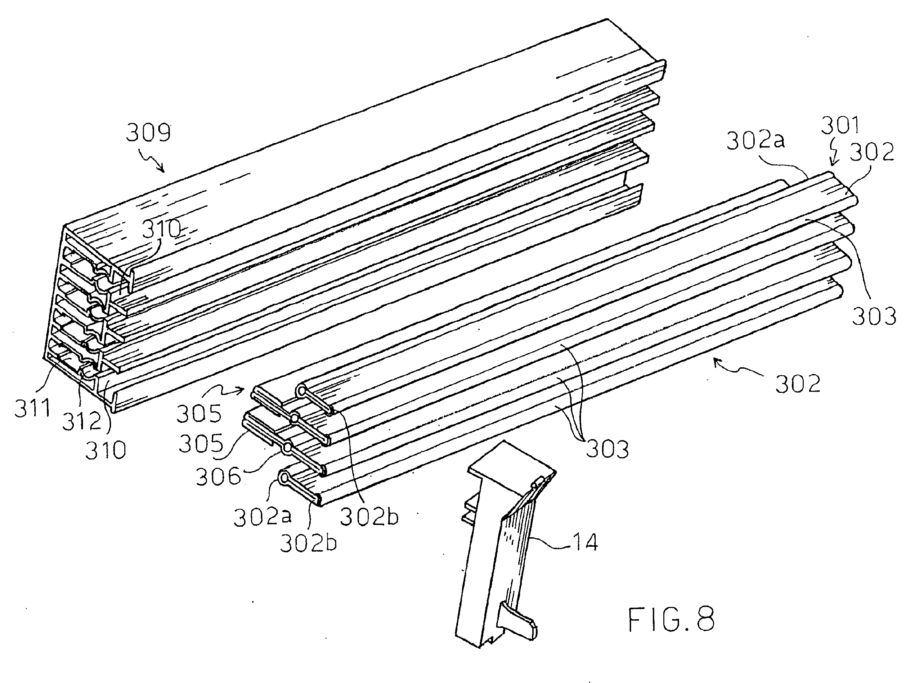

A second embodiment of the distribution bar according to the present invention is shown in Figures 8, 9 and 10.

In this embodiment, the distribution bar 301 comprises a strip 302 made of material which is a conductor of electrical energy (for example, copper). The strip 302 is produced by bending of a piece of sheet metal, for example, around a suitable mandrel so as to form a rear edge 302a with a bulbous cross-section just the same as the profile 104 described above for the second embodiment of the present invention. A profile 303 made of insulating material such as, for example, heat-resistant plastics material, is fixed to the front edge 302b of the strip 302. This profile 303 may be fixed to the strip as described above for the profiles 103, 104, in particular, by coextruding the thermoplastic material onto the edge of the strip. The apparatus shown in Figure 7 and described above may also advantageously be used in this embodiment.

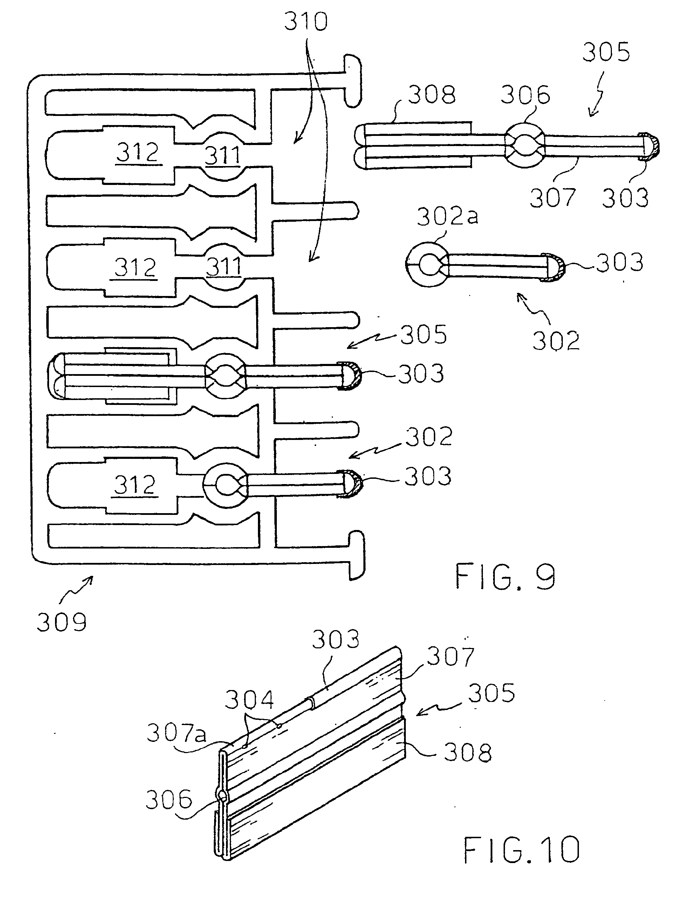

Through-holes 304 are advantageously formed in the vicinity of the front edge 302b of the strip (see Figure 10). When the thermoplastic material, which is still liquid, is extruded onto the edge of the strip it will thus also penetrate these holes and, once set, will anchor the profile to the strip more firmly.

To increase the electrical capacity of the strip, it will be necessary to increase its cross-section. An advantageous method of achieving this object is to bend the sheet of conductive material so as to form, for example, the strip 305. This strip 305 comprises an expanded intermediate section 306 and two flanges, that is, a front flange 307 and a rear flange 308. The flange 307 is exactly the same as that formed in the strip 302 and therefore provides for the arrangement of the profile 303 on its edge 307a. This flange 307 may thus also comprise holes 304 in the vicinity of the edge for improved anchorage of the thermoplastic material thereto.

The rear flange 308, on the other hand, is constituted by the bent metal sheet, the two ends of which have in turn been bent so as to form four adjacent layers.

The base 309 is designed in a manner such that it can house either the strip 302 or the strip 305 of enlarged cross-section. For this purpose, it comprises compartments 310 having an internal cross-section which is divided into a fixing seat 311 and a rear seat 312. The fixing seat 311 has a shape complementary with the expanded portions of the strips, in particular, with the rear edge 302a of the strip 302 and with the expanded intermediate section 306 of the strip 305 so that these strips can be snap-fixed inside it. The rear seat 312, on the other hand, has a shape and size such as to house the rear flange 308 of the strip 305 of enlarged cross-section.

The distribution bar 301 is assembled with the base 309 and the adapter 14 in exactly the same way as described above for the previous embodiments of the present invention.

Naturally, the embodiments of the distribution bar of the present invention described are purely specific embodiments and an expert in the art will be able to apply to them any modifications necessary to adapt them to particular applications.

## Claims

1. An electrical-current distribution bar (1) comprising at least one strip (102; 302; 305) which is a conductor of electrical energy, comprising on at least one edge (107; 302b; 307a) of the at least one strip (102; 302; 305), a profiled section (103, 104; 303) made of insulating material such as not to permit frontal contact with the edge of the strip, **characterised in that** the said profiled section (103, 104; 303) is extruded directly onto the at least one edge (107; 302b; 307a) of the strip (102; 302; 305).

2. A distribution bar according to Claim 1, in which the strip (302) of material which is a conductor of electrical energy is produced by bending of a piece of sheet metal so as to form a rear edge (302a) with a bulbous cross-section and a front edge (302b), the profile (303) made of insulating material being fixed on the front edge (302b).

3. A distribution bar according to Claim 2, comprising through-holes (304) in the vicinity of the front edge (302b) of the strip (302).

4. A distribution bar according to Claim 1, in which the strip (305) of material which is a conductor of electrical energy comprises an expanded intermediate section (306) and two flanges, that is, a front flange (307) and a rear flange (308) .

5. A distribution bar according to Claim 4, in which a profile (303) made of insulating material is fixed to the edge (307a) of the flange (307).

6. A distribution bar according to Claim 4 or Claim 12, comprising holes (304) in the vicinity of the edge (307a) of the flange (307).

7. A distribution bar according to any one of Claims 4 to 6, in which the rear flange (308) is constituted by a piece of bent sheet metal the two ends of which have in turn been bent so as to form four adjacent layers.

8. An electrical-energy distribution device comprising one or more distribution bars (101; 301) as described in Claims 1 to 7 and a base (9; 309) for housing one or more of the distribution bars (101; 301).

9. A device according to Claim 8, in which the base (9; 309) comprises one or more compartments (10; 110; 310) each having an internal cross-section (11; 111; 311), the internal cross-section (11; 111; 311) comprising means for engaging the distribution bar (1; 101; 301; 305) in the compartment (10; 110; 310).

10. A device according to Claim 9, in which the engagement means comprise a complementary seat for snap-engaging the inner profile (104), the rear edge (302a), or the expanded intermediate section (306) of the distribution bar (101; 301).

11. A method of producing a distribution bar according to any one of Claims 1 to 7, comprising the steps of:
- roughening the edges of the strip which are to be covered with insulating material, preferably by milling,
- cutting longitudinal grooves in the surface of the strip (102; 302; 305) in the vicinity of its edges,
- extruding the insulating material onto the roughened edges of the strip (102; 302; 305) so that, once the insulating material has set, it is anchored to the grooves of the strip (102; 302; 305).

12. A method according to Claim 11, comprising the step of providing an extrusion device comprising a pair of scoring tools (202, 202') disposed facing one another, each of the scoring tools comprising a pair of blades (203) spaced apart by a distance less than the width of the strip (102), the scoring tools (202, 202') exerting a predetermined pressure on the two surfaces of the strip (102) whilst the strip is caused to slide longitudinally relative to its axis in a manner such that the blades (203) score the grooves in the surface of the strip (102).

## Patentansprüche

1. Verteilerschiene (1) für elektrischen Strom,
umfassend wenigstens einen Streifen (102; 302; 305), welcher ein Leiter für elektrische Energie ist,
umfassend an wenigstens einem Rand (107; 302b; 307a) des wenigstens einen Streifens (102; 302; 305) einen Profilabschnitt (103, 104; 303), welcher aus Isolationsmaterial hergestellt ist, um einen frontalen Kontakt mit dem Rand des Streifens nicht zuzulassen,
**dadurch gekennzeichnet,**
**dass** der Profilabschnitt (103, 104; 303) direkt auf dem wenigstens einen Rand (107; 302b; 307a) des Streifens (102; 302; 305) extrudiert ist.

2. Verteilerschiene nach Anspruch 1,
wobei der Materialstreifen (302), welcher ein Leiter für elektrische Energie ist, durch Biegen eines Blechstücks derart hergestellt ist, das ein hinterer Rand (302a) mit einem wulstartigen Querschnitt und ein vorderer Rand (302b) gebildet werden, wobei das aus Isolationsmaterial hergestellte Profil (303) an dem vorderen Rand (302b) fixiert ist.

3. Verteilerschiene nach Anspruch 2,
umfassend Durchgangslöcher (304) in der Nachbarschaft des vorderen Rands (302b) des Streifens (302).

4. Verteilerschiene nach Anspruch 1,
wobei der Materialstreifen (305), welcher ein Leiter für elektrische Energie ist, einen expandierten Zwischenabschnitt (306) und zwei Flansche, d.h. einen vorderen Flansch (307) und einen hinteren Flansch (308), umfasst.

5. Verteilerschiene nach Anspruch 4,
wobei ein Profil (303), welches aus Isolationsmaterial hergestellt ist, an dem Rand (307a) des Flansches (307) fixiert ist.

6. Verteilerschiene nach Anspruch 4 oder Anspruch 12,
umfassend Löcher (304) in der Nachbarschaft des vorderen Rands (307a) des Flansches (307).

7. Verteilerschiene nach einem der Ansprüche 4 bis 6,
wobei der hintere Flansch (308) aus einem Stück Biegeblech gebildet ist, dessen zwei Enden wiederum derart gebogen worden sind, um vier benachbarte Lagen zu bilden.

8. Verteilervorrichtung für elektrische Energie,
umfassend eine oder mehrere Verteilerschienen (101; 301) nach einem der Ansprüche 1 bis 7 und eine Basis (9; 309) zum Aufnehmen von einer oder mehreren der Verteilerschienen (101; 301).

9. Vorrichtung nach Anspruch 8,
wobei die Basis (9; 309) ein oder mehrere Fächer (10; 110; 310) umfasst, wobei jedes einen inneren Querschnitt (11; 111; 311) aufweist, wobei der innere Querschnitt (11; 111; 311) Mittel zum Eingreifen der Verteilerschiene (1; 101; 301; 305) in das Fach (10; 110; 310) umfasst.

10. Vorrichtung nach Anspruch 9,
wobei die Eingriffsmittel einen komplementären Sitz umfassen, um mit dem Innenprofil (104), dem hinteren Rand (302a) oder dem expandierten Zwischenabschnitt (306) der Verteilerschiene (101; 301) schnappend in Eingriff zu treten.

11. Verfahren zum Herstellen einer Verteilerschiene nach einem der Ansprüche 1 bis 7, umfassend die Schritte:
- Aufrauen der Ränder des Streifens, welche mit Isolationsmaterial abgedeckt werden sollen, vorzugsweise durch Fräsen,
- Schneiden von Längsrillen in der Fläche des Streifens (102; 302; 305) in der Nachbarschaft seiner Ränder,
- Extrudieren des Isolationsmaterials auf die aufgerauten Ränder des Streifens (102; 302; 305) so dass, sobald sich das Isolationsmaterial gesetzt hat, es an den Rillen des Streifens (102; 302; 305) verankert ist.

12. Verfahren nach Anspruch 11,
umfassend den Schritt des Bereitstellens einer Extrusionsvorrichtung, welche ein Paar von Ritzwerkzeugen (202, 202') umfasst, welche sich gegenüberliegend angeordnet sind, wobei jedes der Ritzwerkzeuge ein Paar von Klingeln (203) umfasst, die voneinander durch eine Entfernung beabstandet sind, die kleiner als die Breite des Streifens (102) ist, wobei die Ritzwerkzeuge (202, 202') einen vorbestimmten Druck auf die zwei Flächen des Streifens (102) ausüben, während der Streifen veranlasst wird, relativ zu seiner Achse in Längsrichtung auf einer Weise zu gleiten, dass die Klingen (203) die Rillen in die Fläche des Streifens (102) ritzen.

## Revendications

1. Barre de distribution de courant électrique (1) comprenant au moins une bande (102; 302; 305) qui est un conducteur de l'énergie électrique, comprenant sur au moins un bord (107; 302b; 307a) de la au moins une bande (102; 302; 305), une section profilée (103, 104; 303) constituée d'un matériau isolant tel qu'il ne permette pas le contact frontal avec le bord de la bande, **caractérisée en ce que** ladite section profilée (103, 104; 303) est extrudée directement sur le au moins un bord (107; 302b; 307a) de la bande (102; 302; 305).

2. Barre de distribution selon la revendication 1, dans laquelle la bande (302) de matériau qui est un conducteur de l'énergie électrique est produite par courbure d'une pièce de métal en feuille de manière à former un bord arrière (302a) avec une section transversale bulbeuse et un bord frontal (302b), le profil (303) constitué de matériau isolant étant fixé sur le bord frontal (302b).

3. Barre de distribution selon la revendication 2, comprenant des trous traversants (304) au voisinage du bord frontal (302b) de la bande (302).

4. Barre de distribution selon la revendication 1, dans laquelle la bande (305) de matériau qui est un conducteur de l'énergie électrique comprend une section intermédiaire expansée (306) et deux brides, c'est-à-dire une bride frontale (307) et une bride arrière (308).

5. Barre de distribution selon la revendication 4, dans laquelle un profil (303) constitué de matériau isolant est fixé au bord (307a) de la bride (307).

6. Barre de distribution selon la revendication 4 ou la revendication 5, comprenant des trous (304) au voisinage du bord (307a) de la bride (307).

7. Barre de distribution selon l'une quelconque des revendications 4 à 6, dans laquelle la bride arrière (308) est constituée d'une pièce de métal en feuille courbée dont les deux extrémités ont à leur tour été courbées de manière à former quatre couches adjacentes.

8. Dispositif de distribution de l'énergie électrique, comprenant une ou plusieurs barres de distribution (101; 301) telles que décrites dans les revendications 1 à 7 et une base (9; 309) pour héberger une ou plusieurs des barres de distribution (101; 301).

9. Dispositif selon la revendication 8, dans lequel la base (9; 309) comprend un ou plusieurs compartiments (10; 110; 310) ayant chacun une section transversale interne (11; 111; 311), la section transversale interne (11; 111; 311) comprenant des moyens pour l'engagement de la barre de distribution (1; 101; 301; 305) dans le compartiment (10; 110; 310).

10. Dispositif selon la revendication 9, dans lequel des moyens d'engagement comprennent un siège complémentaire pour engager par encliquetage le profil interne (104), le bord arrière (302a), ou la section intermédiaire expansée (306) de la barre de distribution (101; 301).

11. Procédé pour la production d'une barre de distribution selon l'une quelconque des revendications 1 à 7, comprenant les étapes de:
- grattage des bords de la bande qui doivent être recouverts avec du matériau isolant, de préférence par fraisage,
- découpe de rainures longitudinales dans la surface de la bande (102; 302; 305) au voisinage de ses bords,
- extrusion du matériau isolant sur les bords grattés de la bande (102; 302; 305) de telle manière que, une fois que le matériau isolant a été déposé, il est ancré sur les rainures de la bande (102; 302; 305).

12. Procédé selon la revendication 11, comprenant l'étape de fourniture d'un dispositif d'extrusion comprenant une paire d'outils de formation de rainures (202, 202') disposés l'un en face de l'autre, chacun des outils pour la formation de rainures comprenant une paire de lames (203) espacées d'une distance inférieure à la largeur de la bande (102), les outils de rainurage (202, 202') exerçant une pression prédéterminée sur les deux surfaces de la bande (102), tandis qu'on fait glisser la bande longitudinalement par rapport à son axe de telle manière que les lames (203) entaillent les rainures dans la surface de la bande (102).
